# EUROPEAN PATENT APPLICATION

(11) **EP 3 220 584 A1**
(43) Date of publication of application: **20.09.2017**
(21) Application number: 15858409.4
(22) Date of filing: 06.02.2015
(51) Int. Cl.: H04L 12/46

(54) **WIFI SHARING METHOD AND SYSTEM, HOME GATEWAY AND WIRELESS LOCAL AREA NETWORK GATEWAY**

(30) Priority: 12.11.2014 CN 201410637855
(71) Applicant: ZTE Corporation, Shenzhen, Guangdong 518057 (CN)
(72) Inventor: YAN, Xiaona, Shenzhen Guangdong 518057 (CN); GE, Chenghua, Shenzhen Guangdong 518057 (CN)
(74) Representative: Studio Torta S.p.A.
(86) International application number: PCT/CN2015/072457
(87) International publication number: WO 2016/074354

(57) **Abstract**

Disclosed is a WIFI sharing method. A home gateway receives a packet sent by a wireless user equipment; when the user equipment is a first user equipment, the packet is encapsulated into a first Generic Routing Encapsulation (GRE) packet; the packet is sent to a wireless local area network (WLAN) gateway through a GRE tunnel; and when the user equipment is a second user equipment, the packet is directly sent to the Internet after passing through a broadband access server. Also disclosed are a WIFI sharing system, a home gateway and a wireless local area network gateway. In this way, a first user and a second user can share WIFI and the first user and the second user are separate in service, so that the user can access the network more conveniently, securely and rapidly, investment costs of the operation enterprise are reduced, and resource utilization rate is improved.

## Description

### TECHNICAL FIELD

The present disclosure relates to the field of communications, and more particularly, to a method and system for sharing a wireless fidelity (WIFI) network, a home gateway and a wireless local area network gateway.

### BACKGROUND

With the rapid development of mobile smart terminals and network technology, more and more users want to access the network quickly and easily, and thereby WIFI sharing technology emerges. The WIFI sharing technology makes full use of existing resources and reduces the investment cost of operating enterprises. A public user may connect to networks through a WIFI hotspot of a home gateway of a private user, which may cause the public user to log in and access the home gateway, and thus cause the safety problem of accessing the WIFI hotspot of the home gateway by the private user.

### SUMMARY

The embodiments of the present disclosure provide a method and system for sharing a WIFI network, a home gateway and a wireless local area network gateway to at least solve how to share the WIFI network of the home gateway of the private user by the public user while avoiding the security problem for the private user's service.

In order to achieve the above object, the present disclosure provides a method of sharing a WIFI network, including:
receiving a packet sent by a wireless user device;
when the user device is a first user device, encapsulating the packet to be a first generic routing encapsulation GRE packet; and
sending the first GRE packet to a wireless local area network gateway WLAN gateway via a GRE tunnel so that the WLAN Gateway decapsulates the first GRE packet and determines to forward the decapsulated packet to either a DHCP server or Internet based on the decapsulated packet from the first user device.

In an embodiment, after sending the first GRE packet to the wireless local area network gateway WLAN gateway via the GRE tunnel, the method further includes:
receiving a second GRE packet sent by the WLAN gateway; and
decapsulating the second GRE packet and sending the decapsulated packet to the user device.

In an embodiment, after receiving the packet sent by the user device, the method further includes:
when the user device is a second user device, directly making the user device access the Internet.

In order to achieve the above object, the present disclosure provides a method of sharing a WIFI network, including:
receiving a first GRE packet sent by a home gateway, the first GRE packet being a packet sent by a first user device and encapsulated by the home gateway; and
decapsulating the first GRE packet and determining to forward the decapsulated packet to either a DHCP server or Internet based on the decapsulated packet from the first user device.

In an embodiment, the determining to forward the decapsulated packet to the DHCP server or the Internet based on the decapsulated packet from the first user device includes:
when the decapsulated packet from the first user device is a dynamic host configuration protocol DHCP packet, sending the packet from the first user device to a dynamic host configuration protocol server DHCP server, so that the DHCP server assigns a network address to the first user device; and
when the decapsulated packet from the first user device is a data packet, sending the packet from the first user device to the Internet.

In an embodiment, the method further includes:
receiving a data packet sent by the Internet network to the first user device; and
encapsulating the data packet into a second GRE packet and sending the second GRE packet to the home gateway so that the home gateway decapsulates the second GRE packet and sends the decapsulated packet to the first user device.

In order to achieve the above object, the present disclosure provides a home gateway, including:
a first receiving unit configured to receive a packet sent by a user device;
an encapsulation unit configured to, when the user device is a first user device, encapsulate the packet to be a first generic routing encapsulation GRE packet; and
a sending unit configured to send the first GRE packet to a wireless local area network WLAN gateway via a GRE tunnel so that the WLAN gateway decapsulates the first GRE packet and determines to forward the decapsulated packet to either a DHCP server or Internet based on the decapsulated packet from the first user device.

In an embodiment, the home gateway further includes:
a second receiving unit configured to receive a second GRE packet sent by the WLAN gateway; and
a decapsulation unit configured to decapsulate the second GRE packet and send the decapsulated packet to the first user device.

In an embodiment, the home gateway further includes a processing unit; and
the processing unit is configured to, when the user device is a second user device, directly make the user device access the Internet.

In order to achieve the above object, the present disclosure provides a wireless local area network WLAN gateway, including:
a first receiving unit configured to receive a first GRE packet sent by a home gateway, the first GRE packet being a packet sent by a first user device and encapsulated by the home gateway; and
a decapsulation unit configured to decapsulate the first GRE packet and determine to forward the decapsulated packet to either a DHCP server or Internet based on contents of the decapsulated packet from the first user device.

In an embodiment, the decapsulation unit is configured to:
when the decapsulated packet from the first user device is a dynamic host configuration protocol DHCP packet, send the packet from the first user device to a dynamic host configuration protocol server DHCP server so that the DHCP server assigns a network address to the first user device; and
when the decapsulated packet from the first user device is a data packet, send the packet from the first user device to the Internet network.

In an embodiment, the wireless local area network gateway further includes:
a second receiving unit configured to receive a data packet sent by the Internet network to the first user device; and
an encapsulation unit configured to encapsulate the data packet as a second GRE packet and send the second GRE packet to the home gateway such that the home gateway decapsulates the second GRE packet and sends the decapsulated packet to the first user device.

In order to achieve the above object, the present disclosure provides a system for sharing a WIFI network, including a home gateway as claimed in claims 7 to 9 and a wireless local area network gateway, wherein the wireless local area network gateway includes:
a first receiving unit configured to receive a first GRE packet sent by a home gateway, the first GRE packet being a packet sent by a first user device and encapsulated by the home gateway; and
a decapsulation unit configured to decapsulate the first GRE packet and determine whether to forward the decapsulated packet to either a DHCP server or Internet based on contents of the decapsulated packet from the first user device.

In an embodiment, the decapsulation unit is configured to:
when the decapsulated packet from the first user device is a dynamic host configuration protocol DHCP packet, send the packet from the first user device to a dynamic host configuration protocol server DHCP server so that the DHCP server assigns a network address to the first user device; and
when the decapsulated packet from the first user device is a data packet, send the packet from the first user device to the Internet network.

In an embodiment, the wireless local area network gateway further includes:
a second receiving unit configured to receive a data packet sent by the Internet network to the first user device; and
an encapsulation unit configured to encapsulate the data packet as a second GRE packet and send the second GRE packet to the home gateway such that the home gateway decapsulates the second GRE packet and sends the decapsulated packet to the first user device.

In the embodiments of the present disclosure, a packet sent by a wireless user device is received; when the user device is a first user device, the packet is encapsulated to be a first generic routing encapsulation GRE packet; and the first GRE packet is sent to a wireless local area network gateway WLAN gateway via a GRE tunnel so that the WLAN Gateway decapsulates the first GRE packet and determines to forward the decapsulated packet to either a DHCP server or Internet based on the decapsulated packet from the first user device; and when the user device is a second user device, the packet is directly forwarded to the Internet after accesing the server via a broadband. In this way, the public user and the private user can share the WIFI network commonly, and the services of the public user and the private user are separated, thereby the user can access the network more conveniently, safely, and quickly, the investment cost of the operating enterprises is saved, and the resource utilization rate is improved.

### BRIEF DESCRIPTION OF THE DRAWINGS

Fig. 1 is a flow chart of a first embodiment of a method for sharing a WIFI according to the present disclosure;
Fig. 2 is a structural diagram of a system for sharing a WIFI provided by the present disclosure;
Fig. 3 is a flow chart of a second embodiment of the method for sharing WIFI according to the present disclosure;
Fig. 4 is a flow chart of a third embodiment of the method for sharing WIFI according to the present disclosure;
Fig. 5 is a flow chart of a fourth embodiment of the method for sharing WIFI according to the present disclosure;
Fig. 6 is a flow chart of a fifth embodiment of the method for sharing WIFI according to the present disclosure;
Fig. 7 is a schematic diagram of functional modules of a first embodiment of a home gateway according to the present disclosure;
Fig. 8 is a schematic diagram of functional modules of a second embodiment of the home gateway according to the present disclosure;
Fig. 9 is a schematic diagram of functional modules of a third embodiment of the home gateway according to the present disclosure;
Fig. 10 is a schematic diagram of functional modules of a first embodiment of a wireless gateway according to the present disclosure;
Fig. 11 is a schematic diagram of functional modules of a second embodiment of the wireless gateway according to the present disclosure; and
Fig. 12 is a schematic diagram of functional modules of a first embodiment of a system for sharing WIFI according to the present disclosure.

The implementation of purpose, functional features and advantages of the present disclosure will be further described in combination with embodiments with reference to the accompanying drawings.

### DETAILED DESCRIPTION

It is to be understood that the specific embodiments described herein are merely illustrative of the present disclosure and are not intended to limit the present disclosure.

The present disclosure provides a method for sharing a WIFI.

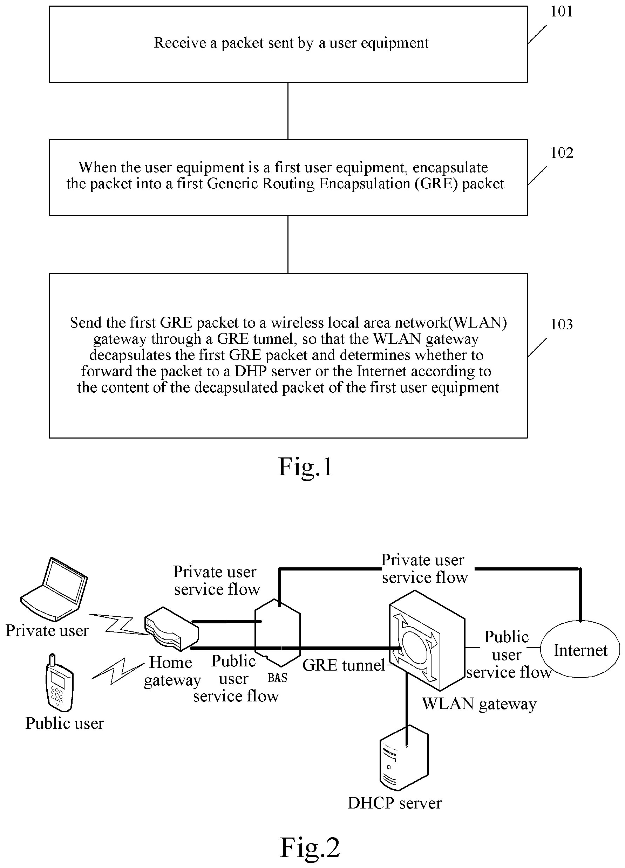

Fig. 1 is a flow chart of a first embodiment of a method for sharing a WIFI according to the present disclosure.

Referring to Fig. 1, in the first embodiment, the method for sharing a WIFI includes the following steps.

In step 101, a packet for accessing a WIFI sent by a user device is received.

Specifically, reference is made to Fig. 2 and Fig. 2 is a structural diagram of a system for sharing a WIFI provided by the present disclosure. As shown in Fig. 2, first, a Generic Routing Encapsulation (GRE) tunnel is established between a home gateway and a Wireless Local Area Networks gateway (WLAN Gateway). In the case where a wireless user device needs to access the Internet network, the wireless user device may send a packet to the home gateway, and the home gateway receives the packet sent by the user device.

In step 102, the packet is encapsulated to be a first Generic Routing Encapsulation GRE packet when the user device is a first user device.

The user device is divided into a public device and a private device. The private device is generally a device of a holder of the home gateway, that is, a second user device in the description. The private user may access the private WIFI hotspot, and has the right to set a user name and a password of the WIFI. The public device is generally an external user device, that is, the first user device. The private user accesses the public WIFI hotspots, and has no right to set the user name and password of the WIFI hotspot.

In step 103, the first GRE packet is sent to a Wireless Local Area Network gateway WLAN gateway through the GRE tunnel so that the WLAN Gateway decapsulates the first GRE packet and, based on contents of the decapsulated packet from the first user device, determines whether to forward the packet to either a DHCP server or Internet.

In particular, when the public device needs to access the WIFI hotspot of the home gateway, the home gateway transmits the first GRE packet through the GRE tunnel, and a device at an opposite end of the tunnel, i.e., the WLAN gateway decapsulates the received first GRE packet and then the first GRE packet becomes an ordinary Ethernet packet. For a Dynamic Host Configuration Protocol (DHCP) packet, a DHCP Server at the opposite end of the tunnel assigns addresses according to the request information. For other data packets, the packet directly accesses the Internet after being decapsulated.

In the embodiments of the present disclosure, a packet sent by a wireless user device is received; when the user device is a first user device, the request packet is encapsulated to be a first generic routing encapsulation GRE packet; and the first GRE packet is sent to a wireless local area network WLAN gateway via a GRE tunnel so that the WLAN Gateway decapsulates the first GRE packet and determines to forward the packet to either a DHCP server or Internet based on contents of the decapsulated packet from the first user device. When the user device is the second user device, the packet is directly sent to the Internet after accessing a server via a broadband. In this way, the public users and the private users can share the WIFI, and the service of the public users and that of the private users are separated, thereby the user can access the network more conveniently, safely and quickly, the operating costs of enterprises can be saved, and the resource utilization rate is improved.

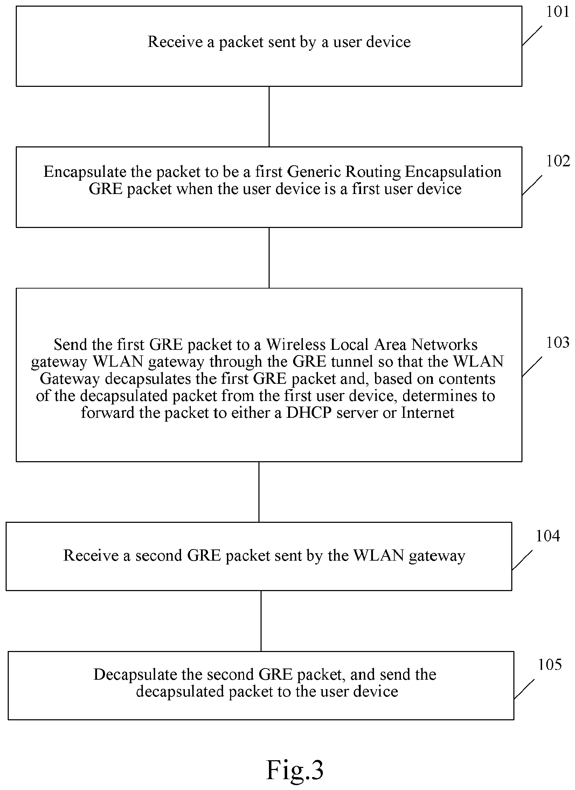

Fig. 3 is a flow chart of a second embodiment of the method for sharing the WIFI according to the present disclosure. As shown in Fig. 3, on the basis of the first embodiment, after the step 103, the method further includes the following steps.

In step 104, a second GRE packet sent by the WLAN gateway is received.

In step 105, the second GRE packet is decapsulated, and the decapsulated packet is sent to the first user device.

Specifically, the second GRE packet becomes a GRE tunnel packet after the GRE encapsulation by the WLAN Gateway, and then is sent to the home gateway after transmission through the GRE tunnel. The home gateway encapsulates the GRE packet, and then sends it to the public user through the shared WIFI hotspot.

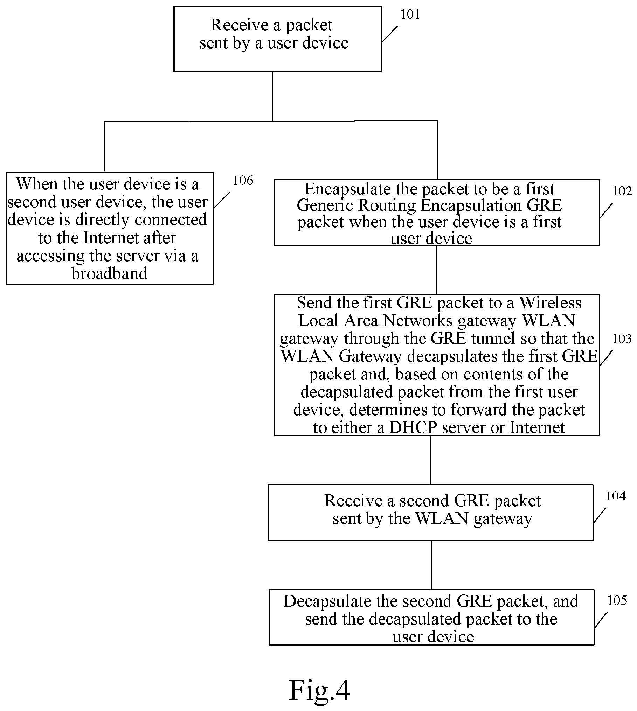

Fig. 4 is a flow chart of a third embodiment of the method for sharing WIFI according to the present disclosure. As shown in Fig. 4, on the basis of the first embodiment or the second embodiment, after the step 101, the method further includes the following steps.

In step 106, when the user device is a second user device, the user device is directly connected to the Internet network.

Specifically, in the case where the user device is a private user device, the home gateway directly sends the packet sent by the private user device to the Internet.

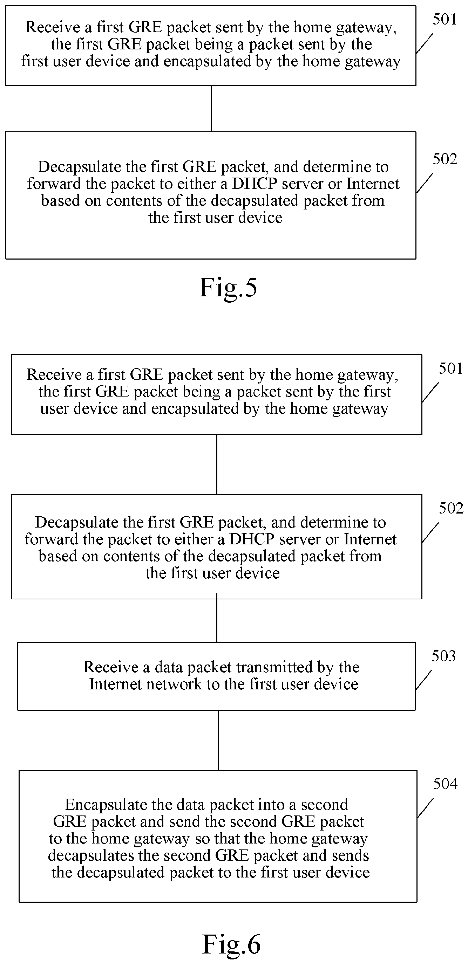

Fig. 5 is a flow chart of a fourth embodiment of the method for sharing WIFI according to the present disclosure.

With reference to Fig. 5, in the fourth embodiment, the method for sharing a WIFI includes the following steps.

In step 501, a first GRE packet sent by the home gateway is received, the first GRE packet being a packet sent by the first user device and encapsulated by the home gateway.

Specifically, reference is made to Fig. 2, which is a structural diagram of a system for sharing a WIFI provided by the present disclosure. As shown in Fig. 2, first, a GRE tunnel is established between the home gateway and the WLAN gateway. When the user device associates to a WIFI hotspot, first, it acquires an address, and after the address is acquired, it may access the Internet network.

The user device is divided into a public device and a private device. The private device is generally a device of a holder of the home gateway, that is, a second user device in the description. The private user may access the private WIFI hotspot, and has the right to set a user name and a password of the WIFI. The public device is generally an external user device, that is, the first user device. The private user accesses the public WIFI hotspots, and has no right to set a user name and a password of the WIFI hotspot.

In step 502, the first GRE packet is decapsulated, and the user device accesses the WIFI according to the decapsulated packet from the first user device.

The making the user device access the WIFI according to the contents of the decapsulated packet from the first user device includes:
in the case that the decapsulated packet from the first user device is a dynamic host configuration protocol DHCP packet, sending the packet from the first user device to a dynamic host configuration protocol server DHCP server so that the DHCP server assigns a network address to the first user device; and
in the case that the decapsulated packet from the first user device is a data packet, sending the packet from the first user device to the Internet network.

In particular, when the public device needs to access a WIFI hotspot of the home gateway, the home gateway transmits the first GRE packet through the GRE tunnel, and a device at an opposite end of the tunnel, i.e., the WLAN gateway decapsulates the received first GRE packet and then the first GRE packet becomes an ordinary Ethernet packet. For a Dynamic Host Configuration Protocol (DHCP) packet, a DHCP server at the opposite end of the tunnel assigns addresses according to the request information. For other data packets, the packet directly accesses the Internet after decapsulation.

In the embodiments of the present disclosure, a packet sent by a wireless user device is received; when the user device is a first user device, the packet is encapsulated to be a first generic routing encapsulation GRE packet; and the first GRE packet is sent to a wireless local area network WLAN gateway via a GRE tunnel so that the WLAN Gateway decapsulates the first GRE packet and determines to forward the packet to either a DHCP server or Internet based on contents of the decapsulated packet from the first user device. When the user device is the second user device, the packet is directly sent to the Internet after accessing a server via a broadband. In this way, the public users and the private users can share the WIFI, and the service of the public users and that of the private users are separated, thereby the user can access the network more conveniently, safely and quickly, the operating costs of enterprises can be saved, and the resource utilization rate is improved.

Fig. 6 is a flow chart of a fifth embodiment of the method for sharing the WIFI according to the present disclosure. As shown in Fig. 6, on the basis of the fourth embodiment, after the step 502, the method also includes the following steps.

In step 503, a data packet transmitted by the Internet network to the first user device is received.

In step 504, the data packet is encapsulated into a second GRE packet and the second GRE packet is sent to the home gateway so that the home gateway decapsulates the second GRE packet and sends the decapsulated packet to the first user device.

Specifically, the second GRE packet becomes a GRE tunnel packet after the GRE encapsulation by the WLAN Gateway, and then is sent to the home gateway after transmission through the GRE tunnel. Then, the home gateway decapsulates the GRE packet, and sends it to the public user through the shared WIFI hotspot.

The present disclosure provides a home gateway.

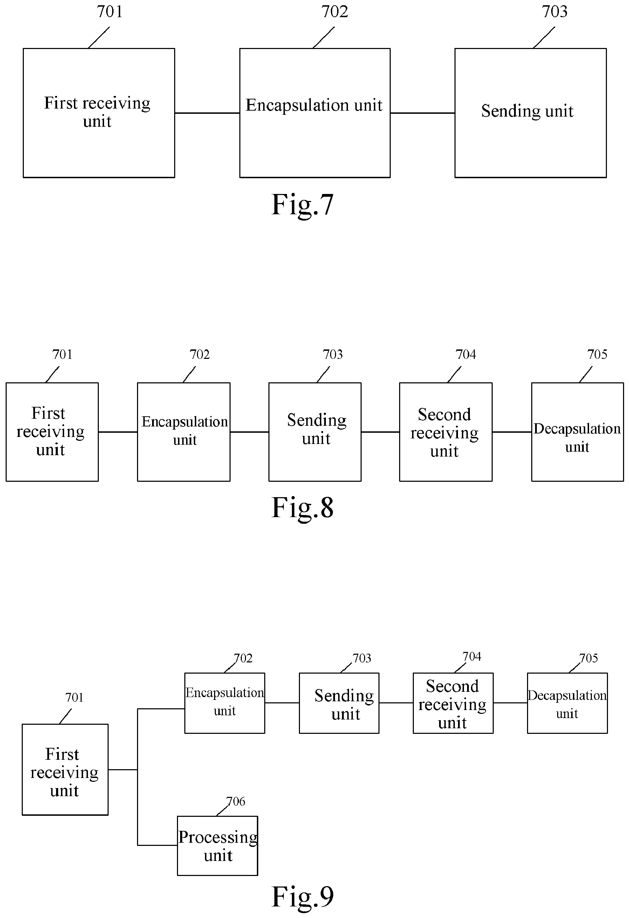

Fig. 7 is a schematic diagram of functional modules of a first embodiment of the home gateway according to the present disclosure.

As shown in Fig. 7, in a first embodiment, the home gateway includes: a first receiving unit 701, an encapsulation unit 702, and a sending unit 703.

The first receiving unit 701 is configured to receive a packet transmitted by a user device.

Specifically, reference is made to Fig. 2, which is a structural diagram of a system for sharing a WIFI provided by the present disclosure. As shown in Fig. 2, first, a GRE tunnel is established between the home gateway and the WLAN gateway. In the case where the user device needs to access the Internet network, the user device associates to the WIFI hotspot and obtains the address, and then starts to connect to the network. The user device sends a packet to the home gateway, and the home gateway receives the packet sent by the user device.

The encapsulation unit 702 is configured to encapsulate the request packet to be a first generic routing encapsulation GRE packet if the user device is a first user device.

The sending unit 703 is configured to transmit the first GRE packet to a wireless local area network WLAN Gateway through a GRE tunnel so that the WLAN Gateway decapsulates the first GRE packet and, based on contents of the decapsulated packet from the first user device, determines to forward the packet to either a DHCP server or the Internet.

In particular, when the public device needs to access a WIFI hotspot of the home gateway, the home gateway transmits the first GRE packet through the GRE tunnel, and a device at an opposite end of the tunnel, i.e., the WLAN gateway decapsulates the received first GRE packet and then the first GRE packet becomes an ordinary Ethernet packet. For a Dynamic Host Configuration Protocol (DHCP) packet, a DHCP server at the opposite end of the tunnel assigns addresses according to the request information. For other data packets, the packet directly accesses the Internet after decapsulation.

In the embodiments of the present disclosure, a request packet for accessing a WIFI sent by a user device is received; when the user device is a first user device, the request packet is encapsulated to be a first generic routing encapsulation GRE packet; and the first GRE packet is sent to a wireless local area network WLAN gateway via a GRE tunnel so that the WLAN Gateway decapsulates the first GRE packet and determines to forward the packet to either a DHCP server or Internet based on contents of the decapsulated packet from the first user device. When the user device is the second user device, the packet is directly sent to the Internet after accessing a server via a broadband. In this way, the public users and the private users can share the WIFI, and the service of the public users and that of the private users are separated, thereby the user can access the network more conveniently, safely and quickly, the operating costs of enterprises can be saved, and the resource utilization rate is improved.

Fig. 8 is a schematic diagram of functional modules of a second embodiment of the home gateway according to the present disclosure. As shown in Fig. 8, on the basis of the second embodiment, the home gateway further includes: a second receiving unit 704, and a decapsulation unit 705.

The second receiving unit 704 is configured to receive a second GRE packet sent by the WLAN gateway.

The decapsulation unit 705 is configured to decapsulate the second GRE packet and send the decapsulated packet to the first user device.

Specifically, the second GRE packet becomes a GRE tunnel packet after the GRE encapsulation by the WLAN Gateway, and then is sent to the home gateway after transmission through the GRE tunnel. Then, the home gateway decapsulates the GRE packet, and sends it to the public user through the shared WIFI hotspot.

Fig. 9 is a schematic diagram of functional modules of a third embodiment of the home gateway according to the present disclosure. As shown in Fig. 9, on the basis of the first or second embodiment, the home gateway further includes: a processing unit 706.

The processing unit 706 is configured to make the user device directly access the Internet in the case where the user device is a second user device.

Specifically, in the case where the user device is a private user device, the home gateway directly sends the packet sent by the private user device to the Internet.

The present disclosure provides a wireless gateway.

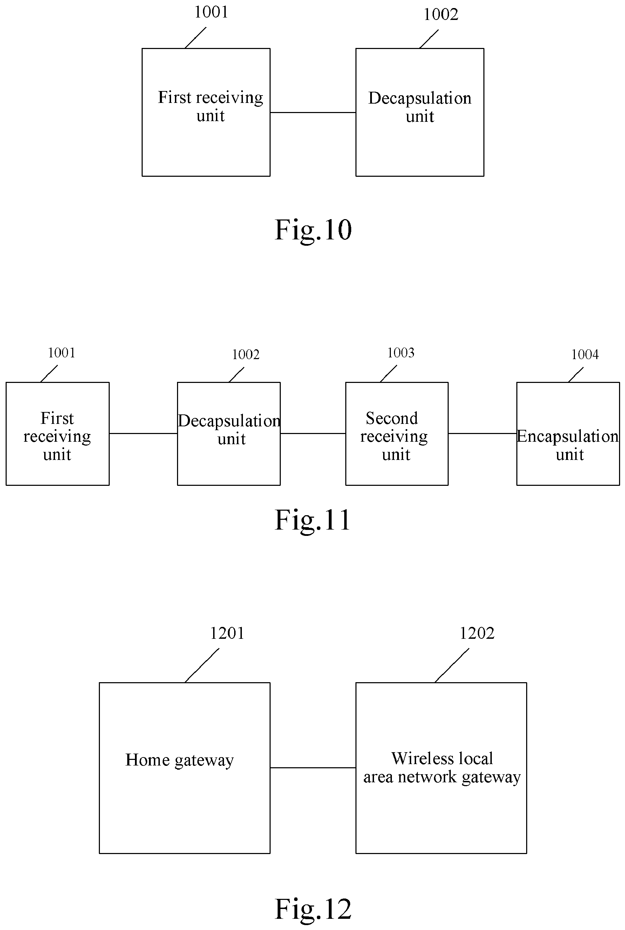

Fig. 10 is a schematic diagram of functional modules of a first embodiment of the wireless gateway according to the present disclosure.

Referring to Fig. 10, in a first embodiment, the wireless gateway includes: a first receiving unit 1001 and a decapsulation unit 1002.

The first receiving unit 1001 is configured to receive a first GRE packet sent by a home gateway, the first GRE packet being a packet sent by a first user device encapsulated by the home gateway.

Specifically, reference is made to Fig. 2, which is a structural diagram of a system for sharing a WIFI provided by the present disclosure. As shown in Fig. 2, first, a GRE tunnel is established between the home gateway and the WLAN gateway. In the case where the user device needs to access the network, the user device transmits the packet for accessing network to the home gateway, then the home gateway receives the packet for accessing network sent by the user device, performs a GRE encapsulation on the packet and sends it to the WLAN gateway via the GRE tunnel. The WLAN gateway receives this GRE packet. The decapsulation unit 1002 is configured to decapsulate the first GRE packet and forward it to the DHCP server or the Internet according to contents of the decapsulated packet from the first user device.

The decapsulation unit 1002 is configured to: in the case that the decapsulated packet from the first user device is a dynamic host configuration protocol DHCP packet, send the packet from the first user device to a dynamic host configuration protocol DHCP server so that the DHCP server assigns a network address to the first user device; and
in the case that the decapsulated packet from the first user device is a data packet, send the packet from the first user device to the Internet network.

In particular, when the public device needs to access the WIFI hotspot of the home gateway, the home gateway transmits the first GRE packet through the GRE tunnel, and a device at an opposite end of the tunnel, i.e., the WLAN gateway decapsulates the received first GRE packet and then the first GRE packet becomes an ordinary Ethernet packet. For a Dynamic Host Configuration Protocol (DHCP) packet, the DHCP server at the opposite end of the tunnel assigns addresses according to the request information. For other data packets, the packet directly accesses the Internet after decapsulation.

In the embodiments of the present disclosure, a packet sent by a user device is received; when the user device is a first user device, the request packet is encapsulated to be a first generic routing encapsulation GRE packet; and the first GRE packet is sent to a wireless local area network WLAN gateway via a GRE tunnel so that the WLAN Gateway decapsulates the first GRE packet and determines to forward the packet to either a DHCP server or Internet based on contents of the decapsulated packet from the first user device. When the user device is the second user device, the packet is directly sent to the Internet after accessing a server via a broadband. In this way, the public users and the private users can share the WIFI, and the service of the public users and that of the private users are separated, thereby the user can access the network more conveniently, safely and quickly, the operating costs of enterprises can be saved, and the resource utilization rate is improved.

Fig. 11 is a schematic diagram of functional modules of a second embodiment of the wireless gateway according to the present disclosure.

As shown in Fig. 11, on the basis of the second embodiment, the wireless local area network gateway further includes: a second receiving unit 1003, and an encapsulation unit 1004.

The second receiving unit 1003 is configured to receive a data packet transmitted by the Internet network to the first user device.

The encapsulation unit 1004 is configured to encapsulate the data packet as a second GRE packet and send the second GRE packet to the home gateway such that the home gateway decapsulates the second GRE packet and sends the decapsulated packet to the first user device.

Specifically, the second GRE packet becomes a GRE tunnel packet after the GRE encapsulation by the WLAN Gateway, and then is sent to the home gateway after transmission through the GRE tunnel. Then, the home gateway encapsulates the GRE packet, and sends it to the public user through the shared WIFI hotspot.

The present disclosure provides a system for sharing a WIFI.

Fig. 12 is a schematic diagram of functional modules of a first embodiment of a system for sharing a WIFI according to the present disclosure.

Referring to Fig. 12, in a first embodiment, the system includes:
the home gateway 1201 as described in Figs. 7-9; and
the wireless local area network gateway 1202 as described in Figs. 10-11.

In the embodiments of the present disclosure, a packet sent by a user device is received; when the user device is a first user device, the request packet is encapsulated to be a first generic routing encapsulation GRE packet; and the first GRE packet is sent to a wireless local area network WLAN gateway via a GRE tunnel so that the WLAN Gateway decapsulates the first GRE packet and determines to forward the packet to either a DHCP server or Internet based on contents of the decapsulated packet from the first user device. When the user device is the second user device, the packet is directly sent to the Internet after accessing a server via a broadband. In this way, the public users and the private users can share the WIFI, and the service of the public users and that of the private users are separated, thereby the user can access the network more conveniently, safely and quickly, the operating costs of enterprises can be saved, and the resource utilization rate is improved.

The foregoing is merely exemplary embodiments of the present disclosure and is not intended to limit the scope of the present disclosure. All the equivalent constructions or equivalent process transformations made by using the present specification and the accompanying drawings, or applications directly or indirectly in other related technical fields, fall within the protection scope of the present disclosure.

### Industrial Applicability

As described above, the method and system for sharing a WIFI, the home gateway, and the wireless local area network gateway provided by the embodiments of the present disclosure have the following advantageous effects: the public user and the private user can share the WIFI together, and the services of the public user and the private user are separated, thereby the user can access the network more conveniently, safely and quickly, the operating costs of enterprises can be saved, and the resource utilization rate is improved.

## Claims

1. A method for sharing a wireless WIFI network, comprising:
receiving a packet sent by a wireless user device, the packet being a request packet or a data packet;
when the user device is a first user device, encapsulating the packet to be a first generic routing encapsulation GRE packet; and
sending the first GRE packet to a wireless local area network WLAN gateway via a GRE tunnel so that the WLAN Gateway decapsulates the first GRE packet and determines to forward the decapsulated packet to either a DHCP server or Internet based on the decapsulated packet from the first user device.

2. The method of claim 1, wherein after sending the first GRE packet to the wireless local area network WLAN gateway via the GRE tunnel, the method further comprises:
receiving a second GRE packet sent by the WLAN gateway; and
decapsulating the second GRE packet and sending the decapsulated packet to the first user device.

3. The method of claim 1 or 2, wherein after receiving the packet sent by the user device, the method further comprises:
when the user device is a second user device, directly forwarding the packet sent by the user device to the Internet.

4. A method for sharing a wireless WIFI network, comprising:
receiving a first GRE packet sent by a home gateway, the first GRE packet being a packet sent by a first user device and encapsulated by the home gateway; and
decapsulating the first GRE packet and determining to forward the decapsulated packet to either a DHCP server or Internet based on the decapsulated packet from the first user device.

5. The method of claim 4, wherein the determining to forward the decapsulated packet to the DHCP server or the Internet based on the decapsulated packet from the first user device comprises:
the first GRE packet after the decapsulation being the packet from the first user device;
when the decapsulated packet from the first user device is a dynamic host configuration protocol DHCP packet, sending the packet from the first user device to the dynamic host configuration protocol server DHCP server, so that the DHCP server assigns a network address to the first user device, and the first user device obtains the address, which is equivalent to accessing the WIFI network; and
when the decapsulated packet from the first user device is a data packet, sending the packet from the first user device to the Internet network.

6. The method according to claim 4 or 5, further comprising:
receiving a data packet sent by the Internet network to the first user device; and
encapsulating the data packet into a second GRE packet and sending the second GRE packet to the home gateway so that the home gateway decapsulates the second GRE packet and sends the decapsulated packet to the first user device.

7. A home gateway, comprising:
a first receiving unit configured to receive a packet sent by a wireless user device, the packet comprising a packet sent by a first user device or a packet sent by a second user device;
an encapsulation unit configured to, when the user device is the first user device, encapsulate the packet to be a first generic routing encapsulation GRE packet; and
a sending unit configured to send the first GRE packet to a wireless local area network WLAN gateway via a GRE tunnel so that the WLAN gateway decapsulates the first GRE packet and determines to forward the decapsulated packet to either a DHCP server or Internet based on the decapsulated packet from the first user device.

8. The home gateway of claim 7, further comprising:
a second receiving unit configured to receive a second GRE packet sent by the WLAN gateway; and
a decapsulation unit configured to decapsulate the second GRE packet and send the decapsulated packet to the first user device.

9. The home gateway of claim 7 or 8, wherein the home gateway further comprises a processing unit; and
the processing unit is configured to, when the user device is the second user device, forward the packet sent by the user device directly to the Internet after accessing a server via a broadband.

10. A wireless local area network WLAN gateway, comprising:
a first receiving unit configured to receive a first GRE packet sent by a home gateway, the first GRE packet being a packet sent by a first user device and encapsulated by the home gateway; and
a decapsulation unit configured to decapsulate the first GRE packet and determine to forward the decapsulated packet to either a DHCP server or an Internet based on contents of the decapsulated packet from the first user device.

11. The wireless local area network gateway of claim 10, wherein the decapsulation unit is configured to:
when the decapsulated packet from the first user device is a dynamic host configuration protocol DHCP packet, send the packet from the first user device to a dynamic host configuration protocol server DHCP server so that the DHCP server assigns a network address to the first user device; and
when the decapsulated packet from the first user device is a data packet, send the packet from the first user device to the Internet network.

12. The wireless local area network gateway of claim 10 or 11, further comprising:
a second receiving unit configured to receive a data packet sent by the Internet network to the first user device; and
an encapsulation unit configured to encapsulate the data packet as a second GRE packet and send the second GRE packet to the home gateway such that the home gateway decapsulates the second GRE packet and sends the decapsulated packet to the first user device.

13. A system for sharing a WIFI network, comprising a wireless local area network gateway and a home gateway as claimed in claims 7 to 9, wherein the wireless local area network gateway comprises:
a first receiving unit configured to receive a first GRE packet sent by a home gateway, the first GRE packet being a packet sent by a first user device and encapsulated by the home gateway; and
a decapsulation unit configured to decapsulate the first GRE packet and determine to forward the decapsulated packet to either a DHCP server or Internet based on contents of the decapsulated packet from the first user device.

14. The system of claim 13, wherein the decapsulation unit is configured to:
when the decapsulated packet from the first user device is a dynamic host configuration protocol DHCP packet, send the packet from the first user device to a dynamic host configuration protocol server DHCP server so that the DHCP server assigns a network address to the first user device; and
when the decapsulated packet from the first user device is a data packet, send the packet from the first user device to the Internet network.

15. The system of claim 13 or 14, wherein the wireless local area network gateway further comprises:
a second receiving unit configured to receive a data packet sent by the Internet network to the first user device; and
an encapsulation unit configured to encapsulate the data packet as a second GRE packet and send the second GRE packet to the home gateway such that the home gateway decapsulates the second GRE packet and sends the decapsulated packet to the first user device.
